# DEMANDE DE BREVET EUROPEEN

(11) **EP 1 331 355 A1**
(43) Date de publication de la demande: **30.07.2003**
(21) Numéro de dépôt: 03370004.8
(22) Date de dépôt: 17.01.2003
(51) Int. Cl.: E06B 9/88, E06B 9/72

(54) **Dispositif destiné à bloquer le tube d'enroulement d'un volet roulant**

(30) Priorité: 18.01.2002 FR 0200639
(71) Demandeur: Bracq, Daniel, 59820 Gravelines (FR)
(72) Inventeur: Bracq, Daniel, 59820 Gravelines (FR)
(74) Mandataire: Tournel, Jean Louis (FR)

(57) **Abrégé**

Dispositif destiné à bloquer le tube rotatif sur lequel s'enroule un volet roulant mû par un moteur électrique dont au moins l'arrêt de son sens de rotation correspondant à l'ouverture est obtenu par obstacle à son rotation. Pourvu d'un limiteur de course (6) logé dans le tube rotatif (3). Le cylindre (7) indépendant du carter (1) étant entrainé directement par le tube rotatif (3) et éventuellement garni d'un manchon intérieur (22).

## Description

La présente invention est relative à un dispositif destiné à bloquer le tube rotatif sur lequel s'enroule un volet roulant mû par un moteur électrique dont l'arrêt est obtenu, au moins dans le sens de l'ouverture, par un obstacle à sa rotation.

Les volets roulants mus par un moteur électrique dont l'alimentation est simplement programmée pour que le tube d'enroulement réalise un nombre de révolutions déterminé sont toujours exposés au risque d'être endommagés, lorsque leur fonctionnement vient à s'enrayer. Un tel incident apparaissant en l'absence de surveillance humaine, du fait d'un fonctionnement automatisé ou d'une commande générale regroupant plusieurs volets, a souvent pour conséquence de maintenir bloqué le moteur dont le volet n'a pu achever son cycle. La détérioration totale du moteur est alors rapide.

Des perfectionnements ont donc visé à remplacer les appareils qui attendent simplement la fin de la course des éléments mobiles pour couper l'alimentation électrique de leur moteur, par des dispositifs qui provoquent cette coupure lors de l'apparition d'une surcharge ou d'un obstacle au déplacement de ces éléments mobiles. Les moyens de blocage, en fin de course, du type de ceux utilisés pour les volets non motorisés, permettent alors de déclencher l'arrêt des moteurs et affranchissent totalement ceux-ci de tout appareil analogique nécessitant un réglage pour reproduire leur course.

Divers moyens permettent d'obtenir un tel arrêt. Les plus simples sont basés sur la mesure du couple libéré par le moteur, à partir dé la déformation d'une liaison élastique entre son stator et le point fixe qui le retient. Ces dispositifs nécessitent toutefois que leur sensibilité soit appropriée aux couples différents mis en jeu selon les sens de rotation du moteur. En effet, dans la phase de descente d'un volet, le moteur n'a qu'un rôle de retenue et l'apparition d'un effort signale toujours une entrave à ce mouvement apparaissant après un certain bourrage du tablier dans son caisson. Le dispositif d'arrêt automatique doit donc être très sensible au cours de cette phase et se déclencher le plus tôt possible.

En phase ascendante, par contre, la charge de départ est forte et s'allège au fur et à mesure de l'enroulement du tablier, pour pratiquement disparaître à la fin. Sauf à ce que le couple du moteur soit régulé à l'aide d'un appareillage onéreux, le couple limite déterminant un arrêt doit être supérieur à celui qui est nécessaire pour assumer cette phase ascendante depuis son départ. Avec des volets lourds, ce couple sera nécessairement élevé et les moyens d'arrêt habituels, en fin d'ouverture, auront à supporter une contrainte qui n'est plus atténuée par le poids du tablier. Une telle façon d'arrêter le moteur exerce alors une traction excessive sur ces arrêts et des nuisances s'ensuivent, tels des grincements ou un blocage de la lame finale dans les coulisses, voire des dommages.

L'invention résout ce problème.

Le dispositif selon celle-ci comprend un limiteur de course associé à un moteur dont au moins l'arrêt de son sens de rotation correspondant à l'ouverture est obtenu sous l'effet d'un obstacle à sa rotation. La caractéristique principale de ce dispositif tient, d'une part, en ce que le limiteur de course est logé dans un cylindre indépendant du carter du moteur, ce cylindre étant introduit dans le tube rotatif pour être entraîné par lui et agir en conséquence sur les éléments de reproduction analogique du mouvement qu'il contient, d'autre part, en ce que le tube rotatif, éventuellement garni d'un manchon intérieur adéquat qui enveloppe le cylindre du limiteur de course, a la capacité de tourner avec un frottement sensiblement constant sur ce cylindre, lorsque ce dernier est bloqué en fin de course et qu'il n'est pas encore lié à lui.

Selon des modes particuliers de réalisation :
- le tube rotatif étant pourvu d'un manchon intérieur qui s'interpose entre le cylindre du limiteur de course et lui, la paroi de ce manchon venant au contact du cylindre peut être garnie de stries rectilignes accolées, des cliquets liés au cylindre du limiteur de course et présentant une surface qui engrène dans les stries du manchon, de sorte que la rotation du manchon sur le cylindre, lorsque ce dernier est bloqué, nécessite un effort constant et que les calages angulaires successifs de ces pièces entre elles soient très rapprochés,
- le limiteur de course formant un embout pour le tube rotatif, son axe peut s'accoupler ou ne faire qu'un avec la partie de la jonction du carter du moteur qui doit rester fixe, cet axe étant un tube par lequel chemine le câble d'alimentation électrique du moteur,
- le cylindre du limiteur de course peut se bloquer après un nombre donné de révolutions autour de son axe, dans l'un et l'autre sens, afin que l'on puisse choisir un sens ou l'autre de rotation de ce cylindre pour trouver une butée, sans avoir à retourner le limiteur de course dans le cas où son orientation ne serait pas bonne,
- un espace peut séparer le cylindre du limiteur de course et le carter du moteur afin d'autoriser la fixation du tablier du volet au tube rotatif par une vis dont la pointe pénètre cet espace.

Les dessins annexés illustrent l'invention.

La figure 1 représente une coupe longitudinale d'un tube rotatif motorisé, pourvu du dispositif selon l'invention.

La figure 2 représente une vue en coupe du limiteur de course.

En référence à ces dessins, le moteur et son réducteur de vitesse sont logés dans un carter (1), une roue (2) en sortie du réducteur entraînant le tube rotatif (3) sur lequel le volet est appelé à s'enrouler.

A l'opposé de cette partie motrice une jonction (4) liant le carter (1) à un axe fixe (5) qui fait saillie hors de lui a pour fonction de détecter et évaluer le couple présent entre ces deux éléments. Habituellement, en cas d'arrêt sur un obstacle à la rotation du moteur, cette jonction autorise des pivotements du carter dont le sens et l'angle dépendent du couple délivré par le moto-réducteur. A partir d'une position d'équilibre du carter, des pivotements opposés atteignant une amplitude définie coupent alors l'alimentation du moteur. Le rotor du moteur est par ailleurs freiné dès la coupure de l'alimentation.

Les coupures d'alimentation du moteur s'opèrent pour des couples très différents selon son sens de rotation et un réglage initial tenant compte de l'affectation de l'un ou l'autre des mouvements du volet à un sens donné de rotation du moteur permet d'attribuer les sensibilités adéquates aux déclenchements d'arrêt du moteur.

Le blocage du tube rotatif (3) qui entraîne l'arrêt du moteur lorsque celui-ci tourne dans le sens qui lui demande le plus d'effort est obtenu par un limiteur de course (6) logé dans un cylindre (7) tournant autour d'un axe central (8). Ce limiteur de course est placé à l'une des extrémités du tube rotatif et il forme pour lui un embout avec un axe porteur qui fait saillie hors du tube rotatif, en vue de sa liaison à un support qui le maintiendra fixement.

Pour éviter toute nuisance aux éléments de sustentation du volet, on aura intérêt à faire s'appliquer la contrainte de torsion que génère le blocage du limiteur de course, entre deux points du tube rotatif, sans faire interagir les supports de ce tube. Pour cela; le limiteur de course (6) est traversé par son axe (8) et l'extrémité de celui-ci, située à l'intérieur du tube rotatif (3), s'enchaîne à l'axe (5) de la jonction (4) du carter (1). La contrainte s'appliquera ainsi entre la roue d'entraînement (2) et le point de fixation (9) du limiteur de course (6) au tube rotatif (3). L'âme de l'axe (8) du limiteur de course (6) est, par ailleurs, creuse afin de permettre l'acheminement des conducteurs électriques réunis dans un câble (10).

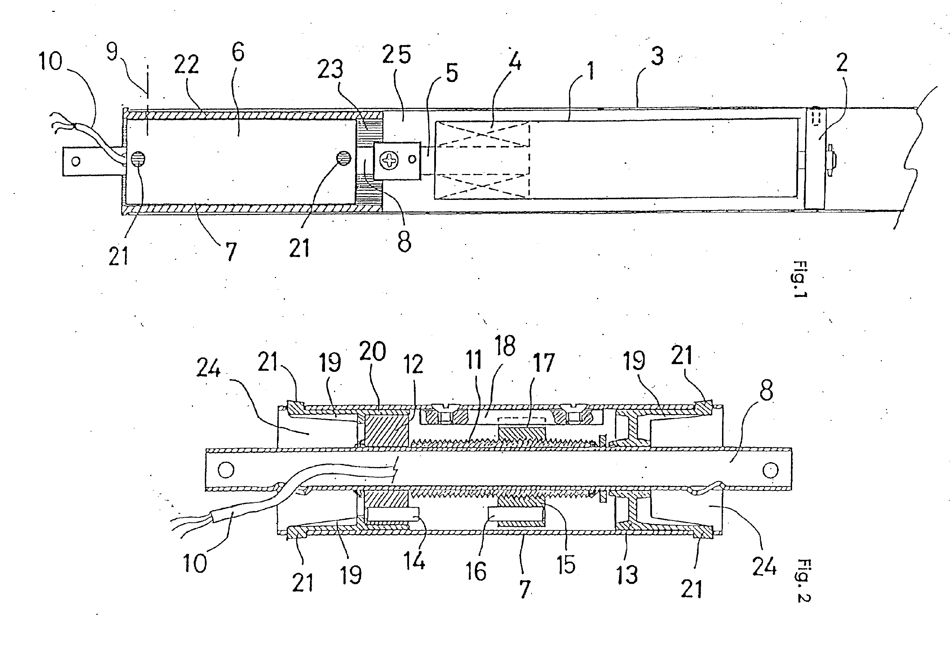

Considérant la figure 2, l'axe (8) du limiteur de course (6) possède une partie centrale filetée (11) en relief. Une bague fixe (12), soudée à l'axe (8), affleure une naissance de cette partie filetée (11) et crée une portée fixe pour le cylindre (7) alors qu'une roue (13) reprend le centrage de ce cylindre avec l'axe, de l'autre coté du filetage. La bague (12) comporte un ergot (14), saillant hors de son flanc qui est orienté vers la partie filetée (11) de l'axe (8). Un écrou (15) comportant un même ergot (16) qui déborde son flanc orienté vers la bague fixe (12), est vissé sur le filetage (11). Cet écrou (16) possède une rainure (17), creusée dans sa surface périphérique selon des génératrices, laquelle permet qu'il soit entraîné en rotation de façon continue par une règle (18) fixée à la paroi intérieure du cylindre (7).

Ainsi, après un certain nombre de révolutions de l'écrou autour de l'axe, dans le sens adéquat, les ergots finissent par buter latéralement l'un contre l'autre après un mouvement d'approche hélicoïdal. Le nombre de révolutions possibles de l'écrou sur la tige filetée doit naturellement être suffisant pour convenir aux nécessités des plus grands enroulements.

En logeant le limiteur de course dans le tube rotatif, on supprime la gêne due à l'encombrement de cet appareil, mais, ce faisant, on est privé d'accès à lui pour un éventuel réglage de la course montante du volet. En effet, le tablier recouvre alors la totalité du tube rotatif et les extrémités des coffres des volets affleurent généralement les tranches du ballot formé par le tablier enroulé.

L'invention résout ce problème de la façon suivante : le limiteur de course tel que décrit ne comporte aucun réglage intrinsèque, mais du fait que son mouvement lui est transmis par un cylindre appelé à tourner avec le tube rotatif, ce cylindre, lorsqu'il est bloqué et qu'il n'est pas lié au tube rotatif, constitue une portée lisse sur laquelle ce tube peut tourner en glissant.

On pourra donc procéder à un enroulement initial du volet opéré alors que le cylindre du limiteur de course est bloqué en fin de course, le tube rotatif tournant sur lui, nonobstant le serrage ou la friction, un contrôle de l'alimentation du moteur permettant, par ailleurs, de mener cette manoeuvre jusqu'à un terme souhaité. Une inversion de mouvement destinée à ramener le tube rotatif à sa position de départ entraîne alors la rotation du cylindre du limiteur de course, celui-ci ayant la liberté de tourner dans ce sens en enregistrant à rebours le nombre de révolutions qu'il aura à effectuer par la suite avant de revenir en butée. Le déroulement du volet ayant remis le tube rotatif à découvert, on pourra alors opérer sa liaison au cylindre du limiteur de course au moyen d'une vis auto-foreuse, par exemple, dont la position (9) sera bien définie par rapport à l'extrémité du tube rotatif. La course est alors mémorisée d'une façon qui ne pourra plus jamais se dérégler.

Pour permettre la liaison du tube rotatif (3) au cylindre (7) du limiteur de course (6), ce dernier possède des prolongements (24) d'une certaine longueur, d'un coté, au delà de sa bague fixe (12) et de l'autre, au delà de sa roue (13) de reprise d'appui sur l'axe (10).

D'autre part, un enregistrement précis de la course suppose l'absence de tout glissement du tube rotatif sur le cylindre, au cours de la manoeuvre de déroulement du volet. Un certain serrage de ces pièces l'une dans l'autre est donc souhaitable. Dans ce but, des languettes souples(19) issues, les unes d'une virole (20) interposée entre la bague fixe (12) et le cylindre (7), laquelle évite incidemment l'usure entre ces pièces, les autres de la roue (13) de centrage du cylindre (7) sur l'axe (8), comportent un bouton (21) qui traverse une perforation pratiquée dans la paroi du cylindre (7) en formant une saillie hors de celui-ci. Ces saillies, une fois comprimées pour s'effacer et permettre l'introduction du cylindre (7) dans le tube rotatif (3) provoqueront le serrage recherché entre ces deux pièces.

La friction des boutons (21) sur la paroi interne du tube rotatif (3) suppose que celui-ci ait également une forme intérieure cylindrique et que les diamètres coïncident. Si ce n'est pas le cas, celui-ci sera garni d'un manchon (22) offrant cette forme et il sera avantageux que la surface de ce manchon (22) au contact du cylindre (7) soit garnie de stries (23) accolées et disposées selon des génératrices, les boutons poussoir (21) faisant saillie au travers du cylindre (7) ayant eux même une surface identique propre à leur donner la fonction de cliquets. Cet engrènement souple confortera la mémorisation de la position angulaire finale des deux pièces tout en autorisant leur dérapage lorsque l'une est bloquée par sa butée et que l'autre est amenée à tourner sous la contrainte du moteur. La pression exercée sur les boutons et la profondeur des stries détermine le couple de dérapage et leur finesse, la précision angulaire. On s'arrangera pour qu'un compromis entre ces valeurs procure un effet satisfaisant.

Il est clair qu'il existe d'autres possibilités pour obtenir un effet de friction similaire à celui procuré par le moyen décrit, lequel ne l'a été qu'à titre indicatif. Ainsi, un tube rotatif réalisé à partir d'une tôle mince, de l'ordre de cinq à six dixièmes de millimètre, profilé avec des cannelures tangentes intérieurement à une surface cylindrique admettra une absence de jeu dans l'insertion du cylindre du limiteur de course en lui. Ce sera un moyen de créer la friction recherchée, par simple serrage.

Par ailleurs, les extrémités de l'axe (8) du limiteur de course (6) sont telles que l'on peut accoupler l'une ou l'autre de celles-ci à l'axe (5) de la jonction (4) du carter (1) du moteur. On pourra alors, en choisissant l'orientation du limiteur de course, lors de cet accouplement, toujours faire correspondre le sens de rotation du cylindre qui amène les ergots de la butée à se rencontrer, avec le sens de l'enroulement du volet, quel que soit celui-ci. L'un ou l'autre des prolongements (24) du cylindre (7) du limiteur de course autorisera la liaison de ce cylindre au tube rotatif (3) sans avoir à changer la position (9) de la vis de liaison.

Enfin, le carter (1) du moteur étant logé en profondeur dans'le tube rotatif (3), un espace (25) est ménagé entre le cylindre (7) du limiteur de course (6) et lui. Un repérage sur le tube rotatif de la zone correspondant à cet espace permettra au poseur du volet de localiser l'endroit où il peut fixer le tablier sur cette partie du tube rotatif (3). En effet, le carter du moteur a généralement un encombrement tel, dans le tube rotatif, qu'il arrive souvent que les vis servant à fixer les attaches du volet au tube rotatif soient trop longues et endommagent le carter en frottant sur lui, de leur pointe.

D'autres formes de réalisation du dispositif méritent d'être citées.

Afin de prévenir toute erreur de montage par l'utilisateur, il est possible de réaliser un seul ensemble réunissant le limiteur de course et le carter du moteur, l'axe du limiteur de course et celui de la jonction du carter ne faisant plus qu'un. Compte tenu que le câble d'alimentation électrique peut, une fois qu'il est sorti de cet axe commun, être acheminé où l'on veut, il pourra être intéressant de créer des tubes rotatifs motorisés dont le coté de sortie du câble est fixé de façon irréversible, de concert avec un sens d'enroulement donné. Le sens de rotation du cylindre du limiteur de course qui conduit à la butée sera lié au mouvement d'ouverture du volet relatif à ce choix.

On pourra néanmoins conserver la réversibilité d'un tel ensemble sous réserve que le limiteur de course présente une butée dans chacun de ses sens de rotation, ces butées étant espacées d'un nombre de révolutions suffisant pour autoriser des enroulements répondant à tous les besoins. L'écrou (15) du limiteur de course (6) possédera alors un ergot (16) sur chacun de ses flancs et la partie filetée de l'axe sera encadrée par deux bagues (12) chacune pourvue d'un ergot (14). On trouvera donc toujours une butée pour bloquer le cylindre du limiteur de course, quel que soit son sens de rotation.

Le limiteur de course pourra se combiner sans difficulté avec des dispositifs d'arrêt automatique du moteur dont l'interversion des sensibilités au couple nécessite un déplacement latéral du tube rotatif, ce dernier pouvant, en effet coulisser sur le cylindre du limiteur de course. Ce réglage de sensibilité sera nécessairement préalable à celui de la course du volet.

## Revendications

1. Dispositif destiné à bloquer le tube rotatif sur lequel s'enroule un volet roulant mû par un moteur électrique dont au moins l'arrêt de son sens de rotation correspondant à l'ouverture est obtenu par obstacle à sa rotation, **caractérisé**, d'une part, en ce qu'il possède un limiteur de course (6) logé dans un cylindre (7) introduit avec le carter (1) du moteur dans le tube rotatif (3), ce cylindre (7) indépendant du carter (1) étant entraîné directement par le tube rotatif (3) pour qu'il agisse en conséquence sur les éléments de reproduction analogique du mouvement qu'il contient, d'autre part, en ce que le tube rotatif (3), éventuellement garni d'un manchon intérieur (22) adéquat qui enveloppe le cylindre (7) du limiteur de course (6), a la capacité de tourner avec un frottement sensiblement constant sur ce cylindre (7), lorsque ce dernier est bloqué en fin de course et qu'il n'est pas encore lié à lui.

2. Dispositif selon revendication 1 **caractérisé en ce que**, le tube rotatif (3) étant pourvu d'un manchon intérieur (22) qui s'interpose entre le cylindre (7) du limiteur de course (6) et lui, la paroi de ce manchon (22) venant au contact du cylindre (7) est garnie des stries rectilignes (23) accolées, des cliquets (21) flexibles liés au cylindre (7) du limiteur de course (6) présentant une surface qui engrène dans les stries du manchon (22), de sorte que la rotation du manchon sur le cylindre du limiteur de course, lorsque ce dernier est bloqué, engendre un frottement régulier et que les calages successifs de ces pièces entre elles soient très rapprochés,

3. Dispositif selon revendication 1 **caractérisé en ce que**, le limiteur de course (6) formant un embout pour le tube rotatif (3), l'axe (8) de celui-ci est accouplé bout à bout ou ne fait qu'un avec la partie (5) de la jonction (4) du carter (1) du moteur qui doit rester fixe, cet axe (8) étant un tube par lequel chemine le câble (10) d'alimentation électrique du moteur,

4. Dispositif selon revendication 1 **caractérisé en ce que** le cylindre (7) du limiteur de course (6) se bloque après un nombre donné de révolutions autour de son axe (8), dans l'un et l'autre sens, afin que l'on puisse choisir un sens ou l'autre de rotation de ce cylindre (7) pour trouver une butée, sans avoir à retourner le limiteur de course (6) dans le cas où son orientation ne serait pas bonne.

5. Dispositif selon revendication 1 **caractérisé en ce qu'**un espace (25) sépare le cylindre (7) du limiteur de course (6) et le carter (1) du moteur afin d'autoriser la fixation du tablier du volet au tube rotatif (3) par une vis dont la pointe pénètre cet espace,
